# EUROPEAN PATENT SPECIFICATION

(11) **EP 2 042 551 B1**
(45) Date of publication and mention of the grant of the patent: **15.05.2013**
(21) Application number: 08016944.4
(22) Date of filing: 26.09.2008
(51) Int. Cl.: C08L 23/10, C08L 97/00

(54) **Plastic composite with earth based organic fibres**
Kunststoffverbundwerkstoff mit erdbasierten organischen Fasern
Composite plastique avec des fibres organiques au sol

(30) Priority: 26.09.2007 DE 102007046234
(43) Date of publication of application: 01.04.2009
(73) Proprietor: PHK Polymertechnik GmbH, 23966 Wismar (DE)
(72) Inventor: Korte, Hans, Dr., 23966 Wismar (DE)
(74) Representative: Kalkoff & Partner

(56) References cited:
- EP-A- 0 693 525
- EP-A- 1 026 197
- WO-A-03/079472
- WO-A-2004/022846
- JP-A- 57 162 594

## Description

Composites made from natural fibres and thermoplastic resins have been developed as a new material group in the beginning of the 1990 years in North America. Mostly, fibre content is more than 50 % (w/w) and wood is the most common fibre type. Profile extrusion of wood polyolefins composite material is the most common application. A typical example of this technology is given in US 5,516,472. Besides one step direct extrusion, two step processes with a compounding step first and an extrusion step second are common (EP 0 667 375 B1).

EP 1026197 discloses a composite sheet material made from wood and olefinic plastics. WO 2004/022846 and JP 57-162594 describe similar products. EP 0 693 525 discloses a method for degradation of a composite material comprising a duroplastic compound. WO 03/079472 describes a thermoplastic component including carbon to improve conductivity.

All known composites of a lignocellulosic filler and a thermoplastic matrix take up moisture, swell and therefore increase in length, width and thickness. This is much reduced compared to natural wood but swelling happens over time in humid environment. Unless these composites are impregnated with biocides, they will be decayed by microorganisms in contact with earth or with water. In processing, lignocellulosic fibres start to smell and to degrade when treated thermally too hard. For natural wood e.g. the thermal decomposition starts at 160°C. Therefore, extrusion of lignocellulosic fibres with polypropylene at 200°C constant tool surface temperature is critical in terms of smelling. Higher temperatures can not be applied during the extrusion step without heavy thermal degradation.

The present invention aims to overcome swelling, smelling and microbial deterioration for wood or natural fibre plastic composite material.

Surprisingly, this object can be achieved using lignocellulosic fibres namely xylite of fibrous structure as fillers. Such fibrous material is found as xylite in lignite. Xylite is coalificated wood in lignite. Xylite can be extracted as a side product from lignite exploitation. Due to its fibrous structure xylite can replace wood in making pellets for fuel application (DE 101 50 074 C1). Xylite is also used as carrier fibre in garden moulds. For technical use xylite varying in size is milled and screened.

Oversized particles not passing a 40 mm sieve are rejected. Dust fines passing a 5 mm sieve are taken off, too.

Latest research shows that lignite not only can be found as a natural product but can be made synthetically. DE 10 2007 012 112 B3 describes a process for hydrothermal carbonisation of biomass to form lignite. A reactor is fed with biomass, water and a catalyst and is heated to a temperature between 150 °C and 250 °C for 2 to 24 h. After said treatment the biomass is coalificated and resembles lignite. In the context of this document, the term synthetical coalification shall be interpreted in a broad meaning. It is not limited to hydrothermal coalification and may include other thermal techniques like pyrolysis etc. Own hydrothermal coalification experiments using pine shives resulted in coalificated particles comparable to xylite. They were suitable for use in wood plastic composites. Both, natural and synthetical lignite products can be used according to the invention.

The resins used to bind the fibrous material belong to the group of thermoplastic resins. Examples of thermoplastic resins are polyolefins and vinyl polymers Examples given for polyolefins are linear or branched polyethylene (PE), as low, middle or high density types (LDPE, MDPE, HDPE) or polypropylene (PP), its co-polymers and/or derivatives. Examples given for vinyl polymers are polystyrene (PS) from low to very high molecular weight, with syn- or isotactical orientation, its co-polymers or derivatives e.g. acrylonitrile butadiene styrene (ABS) or acrylonitrile styrene acrylate (ASA), polyvinylchloride (PVC) its co-polymers or derivatives or ethylene vinyl acetate (EVA) its co-polymers or derivatives.

The concentration of lignocellulosic fibrous material and thermoplastic resin in the inventive composite material may vary from 10% (w/w) to 90% (w/w) of fibrous material, preferably between 40% (w/w) and 85% (w/w) of fibrous material and favourably between 50% (w/w) and 75% (w/w) of fibrous material. For most technical applications the fibre content is higher than 50% (w/w). When exceeding the given limits of fibre content the claimed advantages of the inventive composite material may not be given to full extent.

According to a preferred embodiment, the invented composite material with xylite as fibre source shows less than 10% (w/w), preferred less than 5% (w/w) and favourably less than 3% (w/w) of water uptake after 160 min immersion in boiling water. The composite is dimensionally very stable in moist conditions or storage under water. After 160 min storage in boiling water dimensional changes in length, width and/or thickness are less than 10%, preferred less than 5% and favourably less than 3%.

The composite material according to the invention does not degrade when in contact with earth. It shows less than 5% (w/w), preferred less than 3% and favourably less than 1% weight loss after 3 month exposure in contact with earth.

In a preferred embodiment, the composite material is formed as a sheet or board. It is often covered with a sheeting or cover material to form a sandwich. The cover material can be applied one-sided, preferably double-sided. The cover material consists preferably of fabric, film, sheet-like or (fibre) composites. The term fabric includes all types of textiles, fleeces, paper, paper boards or superimposed yam layers. The fibres in the fabrics may be natural or synthetic or mixtures thereof. The cover layers may be single or multiple layers on one or both sides of the composite material. The covers are fixed to the composite material which forms a centre layer e.g. by thermal bonding of thermoplastic resins and/or by means of glues. The covers may be fixed by mechanical bonding like e.g. stitching, too. However, even if the composite material according to the invention is not formed as a sheet, cover material may be applied.

In a preferred embodiment the centre layer e.g. made of 70% (w/w) xylite and 30% (w/w) polypropylene, is covered with on both sides cover layers of composite material comprising one or several fibrous fleeces impregnated with thermoset resins or resin mixtures. Thermoset resins can be e.g. (not excluding others) urea-, phenol- and/or melamine resins cross linked with formaldehyde. The favourable fleece materials are organic fibres like lignocellulosic fibres or glass fibres for ease of access, good price and good performance.

The cover layers may be fixed to the centre layer in a one step process: all layers, cover layers and centre layers, are pressed in one step. Alternatively, the cover layer or layers may be fixed to the centre layer first and in a second step are bonded to each other.

Sandwich structures of impregnated fleece composite cover layers on xylite-composite centre layers are improved in bending strength by 10% or more. Examples of sandwich structures are given in table 1.

**Table 1**

| Strength behaviour of xylite-plastic composite material and of a reference of softwood-plastic composites material in sheet form with polypropylene (PP) or polystyrene (PS) as matrix and with or without sandwich cover layers. | | | | |
|---|---|---|---|---|
| **Nr.** | **fibre** | **polymer** | **cover** | **bending strength** |
| 1 | xylite 70% | PP 30% | - | 20,8 N/mm² |
| 2 | xylite 70% | PS 30% | - | 28,3 N/mm² |
| 3 | softwood 70% | PP 30% | - | 24,3 N/mm² |
| 4 | xylite 70% | PP 30% | glass fleece 60 g | 21,6 N/mm² |
| 5 | xylite 70% | PP 30% | glass fleece 60 g + 60 g MF | 33,1 N/mm² |
| 6 | xylite 70% | PP 30% | kraft paper 210 g + 95 g PF | 36,3 N/mm² |

| | | | | |
|---|---|---|---|---|
| MF= Melamine Formaldehyde, PF=Phenol Formaldehyde | | | | |

Table 1 shows that strength properties of xylite-plastic composites are in the magnitude of (soft) wood-plastic composites. Sandwich structures enhance strength. Especially the sandwiches with melamine formaldehyde impregnated glass fleece or with phenol formaldehyde impregnated kraft paper show performance increases by more than 50%.

The composite material made of coalificated fibres and plastic shows reduced thermal expansion and shrinkage compared to the unfilled polymer. Preferably the thermal expansion is reduced at least by 50%. The thermal expansion coefficient for the used unfilled polypropylene, i.e. for the polypropylene without the fibre component, is about 180 * 10⁻⁶/°K. For the composite with 70% xylite it is about 58 * 10⁻⁶/°K. According to the invention the thermal expansion coefficient of the composite is below 70 * 10⁻⁶/°K.

It is possible to foam the composite material according to the invention in extrusion, injection moulding or board pressing by use of physical or chemical blowing agents. Without blowing agent a xylite-polypropylene composite shows a density of about 1.1 g/cm³. With addition of 2% of blowing agent, e.g. azodicarbonamide (ADC) the densities are below 0.7 g/cm³.

By use of blowing agents the densities of the invented composites are below 0.9 g/cm³, favourably below 0.8 g/cm³ and preferably below 0.7 g/cm³.

Swelling in water is an essential quality criterion for composite material. Swelling means on one hand a change in dimension, e.g. elongation in width and/or thickness and/or length which has to be taken into consideration when using composites in construction. On the other hand uptake of water makes lingocellulosic material accessible for microbial decay. Table 2 shows water uptake and swelling of composites after immersion in boiling water. Water uptake in boiling water is much more intense compared to water uptake at room conditions. It therefore allows in short time to assume the long time behaviour of a composite material at room conditions.

**Table 2**

| Water uptake and swelling of different composite materials made by board pressing (after 160 min immersion in boiling water). | | | | |
|---|---|---|---|---|
| **Nr.** | **fibre** | **polymer** | **weight increase** | **volume increase** |
| 1 | xylite 70% | PP 30% | 2.5% | 0.3% |
| 2 | softwood 70% | PP 30% | 27.0% | >22.0% |

In an impressive way table 2 shows that for the composite using 70% (w/w) of xylite water uptake and swelling are less than 1/10 compared to a composite using 70% (w/w) of softwood.

Due to its high swelling resistance, the inventive composite material is an ideal carrier material for flooring like laminate in potential moist conditions like bath rooms or kitchens.

Examples of invented composites are given below.

### Example 1:

3.5 kg xylite fibres (based on oven dry substance) passing a screen of 20 mm, 1.5 kg polypropylene (Basell: Moplen HP 500 V) as matrix substance and 0.1 kg blowing agent (Lancess: Porofor ADC/F-C₂, reaction temperature 214°C) are mixed in a fluid and cooling mixer (Henschel FM40/KM85) at 180°C to a homogeneous agglomerate.
288 g agglomerates are filled into a cavity of 200 mm * 200 mm of a preheated board pressing tool of 205°C. The preheated (205°C) punch fitting into the cavity is put onto the agglomerate and the tool composed of cavity and punch is put into a preheated hot press of 230°C. The press is closed with 14 bar and the agglomerate is compressed and heated up. After 2-3 min the pressure of the press is released to enable the blowing agent to lift up the punch. The opening of the press is fixed such that the resulting thickness of the board is 10 mm. When the blowing agent lifts the punch the heating is stopped and cooling of the pressing plates with water injection is started. After about 10 min the press is cooled down to about 50°C at which temperature the tool can be taken off the press to deform the composite board. After deburring the board of 200 * 200 * 10 mm weighs 252 g. This corresponds to a density of 0.63 g/cm³.

### Example 2:

A mixture of 50% (w/w, based on oven dry substance) xylite passing a 40 mm screen and 50% (w/w) polypropylene (Borealis: HC 205 TF) is agglomerated with a fluid-and-cooling mixer (Reimelt-Henschel Mischsysteme GmbH). The same is done with a mixture of 70% (w/w, based on oven dry substance) xylite and 30% (w/w) polypropylene (Borealis: HC 205 TF). Both agglomerates are injection moulded to form sticks of 100 mm length, 10 mm width and 3.5 mm thickness. Both mixtures are easily being moulded. The performance is given in table 3.

**Table 3**

| Bending strength and swelling after 2 h immersion in boiling water of xylite-polypropylene composite material. | | | | | |
|---|---|---|---|---|---|
| **Nr.** | **fibre** | **polymer** | **density** | **bending strength** | **volume increase** |
| 1 | xylite 50% | PP 50% | 1.07 g/cm³ | 44 N/mm² | 1.16% |
| 2 | xylite 70% | PP 30% | 1.19 g/cm³ | 30 N/mm² | 1.85% |

### Example 3:

Shives of pine (Pinus sylvestris) are hydrothermally treated for 5.5 h at a maximum temperature of 220 °C and then cooled down over 6.5 h to get synthetic xylite shives (syn. xylite). These are dried over night at 80 °C and then for 2 h at 105 °C. 50% (w/w) of these oven dry shives are mixed with 50% (w/w) of polypropylene powder (Atofina PPC 11712) and pressed to a board at 210 °C and 14 bar. For comparison, xylite shives were replaced by softwood particles (LaSoLe CB15E). Stripes taken from the boards were tested for bending strength and swelling behaviour. Results are given in table 4.

**Table 4**

| Bending strength and swelling after 2 h immersion in boiling water of synthetic xylite-polypropylene and softwood-polypropylene composites | | | | | |
|---|---|---|---|---|---|
| **fibre** | **polymer** | **density** | **bending strength** | **weight increase** | **volume increase** |
| syn. xylite 50% | PP 50% | 1.0 g/cm³ | 18.7 N/mm² | 4.8% | 5.5% |
| softwood 50% | PP 50% | 1.0 g/cm³ | 19.4 N/mm² | 21.4% | 17.7% |

It can be seen that bending strength is in the same range for both fibre types but swelling is 3 - 4 times less with synthetic xylite as fibre component.

Coalificated fibre plastic composites can be shaped according to the state of the art into foamed or solid products by pressing of board shaped intermediate products, extrusion and/or injection moulding.

## Claims

1. Composite material comprising lignocellulosic fibres and polymers, wherein the fibres are xylite of fibrous structure and the polymers are thermoplastic polymers selected from the group of polyolefins and vinyl polymers.

2. Composite material according to claim 1, wherein fibres are passing a 60 mm screen, preferably a 40 mm screen and favourably a 20 mm screen and wherein dust and small particle fractions are eliminated by screens of 10 mm, preferably 5 mm.

3. Composite material according to claim 1-2, wherein the fibre content of the composite material ranges from 10% (w/w) to 90% (w/w), preferably from 40% (w/w) to 85% (w/w), especially preferably from 50% (w/w) to 75% (w/w) and wherein the polymer content ranges from 90% (w/w) to 10% (w/w), preferably from 60% (w/w) to 15% (w/w), especially preferably from 50% (w/w) to 25% (w/w).

4. Composite material according to claims 1 to 3, wherein the composite is foamed and reduced in density by use of a physical or chemical blowing agent, preferably an exothermal blowing agent, e.g. azodicarbonamide (ADC) or mixture with ADC and wherein the density of the foamed composite is more than 0.2 g/cm³, preferably more than 0.3 g/cm³ and favourably more than 0.4 g/cm³ smaller than that of the unfoamed composite.

5. Composite material according claims 1-4 with a sandwich structure comprising a centre layer and at least one cover layer, wherein the cover layer consists of sheet metal, foil, textiles, e.g. fleece, fabric, knit fabrics, mono or multi directional fibre layers, fleece, e.g. paper, or composite material.

6. Composite material according to claim 5, wherein at least one cover layer consists of textiles or paper impregnated with thermoset resin, e.g. melamine-formaldehyde, phenol-formaldehyde resin, urea-formaldehyde resin or mixtures thereof.

7. Use of a composite material according to claims 1 to 6, wherein the composite material is used as carrier material for flooring, preferably as a carrier material for laminate flooring.

8. Application of a composite material according to claim 7, wherein the composite material is used as flooring carrier material in potential moist environments like bath rooms, kitchens etc.

## Patentansprüche

1. Verbundwerkstoff bestehend aus Lignocellulosefasern und Polymeren, wobei die Fasern Xylit-faseriger Struktur und die Polymere Thermoplasten sind, ausgewählt aus der Gruppe der Polyolefine und Vinylpolymere.

2. Verbundwerkstoff nach Anspruch 1, **dadurch gekennzeichnet, dass** die Fasern ein 60 mm Sieb, bevorzugt ein 40 mm Sieb und vorteilhaft ein 20 mm Sieb passieren und in welchem Staub und Feinpartikelfraktionen mit 10 mm Sieben, bevorzugt mit 5 mm Sieben entfernt werden.

3. Verbundwerkstoff nach den Ansprüchen 1 - 2, **dadurch gekennzeichnet, dass** der Fasergehalt des Verbundmaterials von 10% (w/w) bis 90% (w/w), bevorzugt von 40% (w/w) bis 85% (w/w), besonders bevorzugt von 50% (w/w) bis 75% (w/w) beträgt und in welchem der Polymergehalt von 90% (w/w) bis 10% (w/w), bevorzugt von 60% (w/w) bis 15% (w/w), besonders bevorzugt von 50% (w/w) bis 25% (w/w) beträgt.

4. Verbundwerkstoff nach den Ansprüchen 1 - 3, **dadurch gekennzeichnet, dass** das Verbundmaterial mit Hilfe von physikalischen oder chemischen Treibmitteln, bevorzugt einem exothermen Treibmittel, z.B. Azodicarbonamid (ADC) oder einer Mischung mit ADC geschäumt und in der Dichte reduziert wird und in welchem die Dichte des geschäumten Verbundmaterials mehr als 0,2 g/cm³, bevorzugt mehr als 0,3 g/cm³ und vorteilhaft mehr als 0,4 g/cm³ niedriger als beim ungeschäumten Verbundmaterial ist.

5. Verbundwerkstoff nach den Ansprüchen 1 - 4 mit einem Sandwichaufbau, bestehend aus einer Mittelschicht und mindestens einer Deckschicht, **dadurch gekennzeichnet, dass** die Deckschicht aus einem Metallblech, einer Folie, Textilien, z.B. einem Vliesstoff, Gewebe, Gestrick, mono- oder multidirektionalen Fasergelegen, einem Vliesstoff, z.B. Papier, oder Verbundwerkstoff besteht.

6. Verbundwerkstoff nach Anspruch 5, **dadurch gekennzeichnet, dass** mindestens eine Deckschicht aus mit einem duroplastischen Harz, wie z.B. Melamin-Formaldehyd, Phenol-Formaldehyd, Harnstoff-Formaldehyd oder Mischungen derselben imprägnierten Textil oder Papier besteht.

7. Verwendung eines Verbundmaterials nach den Ansprüchen 1 - 6, **dadurch gekennzeichnet, dass** der Verbundwerkstoff als Trägermaterial für Fußböden, bevorzugt als Trägermaterial für Laminatfußböden eingesetzt wird.

8. Anwendung eines Verbundwerkstoffs nach Anspruch 7, **dadurch gekennzeichnet, dass** der Verbundwerkstoff als Fußbodenträgermaterial in potentiell feuchter Umgebung wie Badezimmern, Küchen etc. eingesetzt wird.

## Revendications

1. Matériau composite comprenant des fibres lignocellulosiques et des polymères, dans lequel les fibres sont du xylite de structure fibreuse et les polymères sont des polymères thermoplastiques sélectionnés à partir du groupe de polyoléfines et de polymères vinyles.

2. Matériau composite selon la revendication 1, **caractérisé en ce que** les fibres traversent un écran de 60 mm, de préférence un écran de 40 mm et favorablement un écran de 20 mm et **en ce que** la poussière et les petites fractions de particules sont éliminées par des écrans de 10 mm, de préférence de 5 mm.

3. Matériau composite selon les revendications 1 - 2, **caractérisé en ce que** la teneur en fibre du matériau composite s'élève de 10% (selon le poids) à 90% (selon le poids), de préférence de 40% (selon le poids) à 85% (selon le poids), notamment de préférence de 50% (selon le poids) à 75% (selon le poids) et dans lequel la teneur en polymères s'élève de 90% (selon le poids) à 10% (selon le poids), de préférence de 60% (selon le poids) à 15% (selon le poids), notamment de préférence de 50% (selon le poids) à 25% (selon le poids).

4. Matériau composite selon les revendications 1- 3, **caractérisé en ce que** le composite est moussé et réduit en densité en utilisant un agent d'expansion physique ou chimique, de préférence un agent d'expansion exothermique, par ex. l'azodicarbonamide (ADC) ou un mélange avec de l'ADC, la densité du composite moussée étant inférieure à celle du composite non moussé de plus de 0,2 g/cm³, de préférence de plus de 0,3 g/cm³ et favorablement de plus de 0,4 g/cm³.

5. Matériau composite selon les revendications 1- 4 avec une structure en sandwich comprenant une couche centrale et au moins une couche de couverture, la couche de couverture consistant en une feuille de métal, du film, des textiles, par ex. polaire, tissu, tissus tricotés, couches de fibre mono ou multidirectionnelles, polaire, par ex. papier ou matériau composite.

6. Matériau composite selon la revendication 5, **caractérisé en ce qu'**au moins une couche de couverture est constituée de textiles ou de papier imprégné de résine thermodurcissable, par ex. une résine de mélamine-formaldéhyde, une résine de phénol-formaldéhyde, une résine d'urée-formaldéhyde ou des mélanges de celles-ci.

7. Utilisation d'un matériau composite selon les revendications 1 - 6, **caractérisé en ce que** le matériau composite est utilisé en tant que matériau de support pour le sol, de préférence en tant que matériau de support pour les revêtements de sols en stratifiés.

8. Application d'un matériau composite selon la revendication 7, **caractérisée en ce que** le matériau composite est utilisé comme matériau de support de sol dans les environnements potentiellement humides comme les salles de bain, les cuisines, etc.
